# FASCICULE DE BREVET EUROPEEN

(11) **EP 3 421 311 B1**
(45) Date de publication et mention de la délivrance du brevet: **30.03.2022**
(21) Numéro de dépôt: 18179955.2
(22) Date de dépôt: 26.06.2018
(51) Int. Cl.: B60T 13/14, B60T 17/04, B60T 13/22, B60T 8/17

(54) **DISPOSITIF DE FREIN DE SECOURS À COUPLE VARIABLE**
NOTBREMSVORRICHTUNG MIT VARIABLEM DREHMOMENT
EMERGENCY BRAKE DEVICE WITH VARIABLE TORQUE

(30) Priorité: 27.06.2017 FR 1755911
(43) Date de publication de la demande: 02.01.2019
(73) Titulaire: Poclain Hydraulics Industrie, 60410 Verberie (FR)
(72) Inventeur: HEREN, Jean, 60410 Verberie (FR); PRIGENT, André, 60410 Verberie (FR)
(74) Mandataire: Regimbeau

(56) Documents cités:
- EP-A1- 2 465 743
- EP-A2- 1 193 152
- EP-A2- 1 541 438
- EP-B1- 1 541 438
- EP-B1- 2 465 743
- WO-A1-2008/078005
- FR-A1- 2 964 073
- FR-A1- 3 002 991
- FR-A1- 3 033 613
- GB-A- 2 193 772
- US-A- 4 349 233
- US-A1- 2014 225 426

## Description

### DOMAINE TECHNIQUE GÉNÉRAL ET ART ANTÉRIEUR

L'invention concerne le freinage de machines tournantes, notamment au sein de véhicules.

Au sein des véhicules dont la vitesse de déplacement est faible, typiquement inférieure à 30km/h, une évolution de la législation, notamment en France et en Europe, autorise l'utilisation des systèmes de freinage de stationnement pour des situations de freinage de secours.

Un taux de décélération est ainsi indiqué pour répondre aux critères de cette utilisation, ce taux de décélération correspondant à un couple de freinage calculé au niveau des roues sur lesquelles agit le système de freinage de stationnement.

Les systèmes de freinage de stationnement sont habituellement dimensionnés pour assurer une position fixe du véhicule dans toutes les situations potentielles liées à son domaine d'utilisation, par exemple sur des terrains très accidentés et/ou très pentus, et présentent en conséquence un couple de freinage très important.

Les véhicules concernés, à faible vitesse de déplacement, sont généralement des machines agricoles ou des engins de chantier, dont l'utilisation expose la machine à des environnements très exigeants.

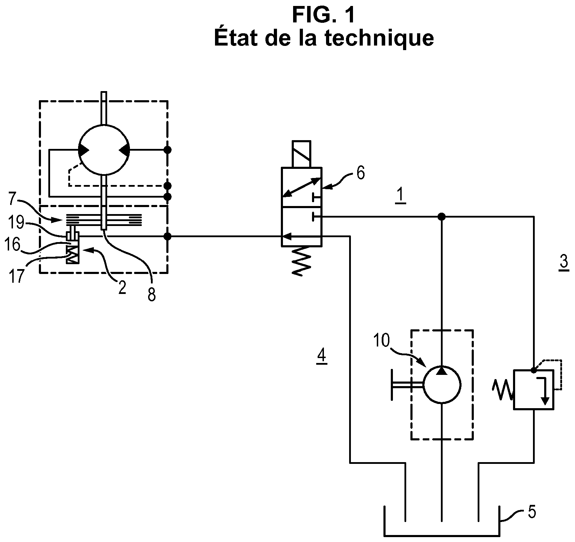

En référence à la figure 1 annexée, un système de freinage classique de l'art antérieur comporte un système de commande hydraulique 1 permettant d'activer ou de désactiver un actionneur 2 à simple effet, comportant une chambre 19, un piston 16 et un élément élastique 17. Il s'agit typiquement d'un frein négatif, c'est-à-dire que l'effort de freinage est exercé lorsque le frein n'est pas alimenté en pression et qu'une alimentation en pression hydraulique appliquée dans la chambre 19 sert au contraire à libérer le système.

L'élément élastique 17 exerce un effort sur le piston 16, auquel s'oppose la pression d'activation de l'actionneur 2 lorsqu'une telle pression est appliquée dans la chambre 19.

Le système hydraulique 1 comporte dans le mode de réalisation illustré sur la figure 1, un circuit de mise en pression 3 et un circuit de vidange 4, s'étendant tous deux entre un réservoir de fluide 5 et un distributeur 6.

Le distributeur 6 permet d'alimenter la chambre 19 de l'actionneur 2 par un fluide pressurisé provenant d'une pompe 10 ou de relier la chambre 19 au circuit de vidange 4, permettant ainsi de commander son action.

Lorsque la chambre 19 est alimentée en fluide pressurisé, cette pression est transformée en effort par le piston 16, ce qui a pour effet de comprimer l'élément élastique 17 et de relâcher le frein.

Lorsque la chambre 19 est reliée au circuit de vidange 4, la pression dans la chambre 19 diminue ainsi que l'effort exercé par le piston 16 sur l'élément élastique 17.

L'élément élastique 17 exerce alors un effort de serrage sur une série de disques 7 statiques et de disques 7 mobiles intercalés.

Les disques 7 mobiles solidaires de l'arbre moteur 8 sont ainsi pressés entre les disques 7 statiques par l'actionneur 2 (par l'intermédiaire de l'élément élastique 17), cette action induisant un couple de freinage obtenu par frottement.

Le couple de freinage de ces systèmes étant classiquement dimensionné pour des situations extrêmes, il est trop important pour répondre aux spécifications requises pour un système de freinage de secours, notamment vis-à-vis d'un risque de blocage de roues, malgré la diminution du couple de freinage liée à une situation de frottement dynamique par rapport à un frottement statique.

Le document US2014/225426 divulgue un exemple de dispositif de freinage comportant un actionneur, un circuit de mise en pression alimentant l'actionneur et un circuit de vidange.

Le document EP 1541438 divulgue un autre circuit de freinage pour véhicule.

### PRÉSENTATION GÉNÉRALE DE L'INVENTION

Un but de l'invention est de permettre de moduler le couple de freinage, notamment par l'obtention d'une pression intermédiaire pour obtenir une force de freinage ne générant pas de blocage des roues.

Un autre but est d'augmenter la capacité énergétique du système de freinage.

Selon un aspect, l'invention propose un dispositif de freinage comportant un actionneur, un circuit de mise en pression alimentant l'actionneur par une pression de commande et un circuit de vidange comportant des moyens de contrôle de débit du fluide d'alimentation de l'actionneur, lors d'une vidange de l'actionneur, caractérisé en ce que les moyens de contrôle comprennent un limiteur de débit de vidange et un limiteur de pression de contre-pression configurés pour définir une pression intermédiaire entre un niveau bas de pression et la pression de commande de l'actionneur.

Un tel dispositif est avantageusement complété par les différentes caractéristiques suivantes prises seules ou en combinaison :
- Le circuit de mise en pression du fluide d'alimentation de l'actionneur comporte une pompe ou un accumulateur hydraulique et un limiteur de pression ;
- L'actionneur comprend une chambre, un piston et un élément élastique tendant à ramener le piston dans sa position de repos;
- Le dispositif comporte un distributeur configuré pour prendre au moins deux positions, une première position configurée pour alimenter l'actionneur en fluide sous pression, une deuxième position configurée pour vidanger l'actionneur ;
- Le dispositif comporte au moins un limiteur de débit de contre-pression configuré pour alimenter la chambre de l'actionneur en fluide quelle que soit la position du distributeur ;
- Le système de freinage comporte en outre des disques de frein, l'élément élastique est configuré pour exercer un effort sur les disques, le piston est configuré pour contrer l'effort exercé par l'élément élastique lorsque la chambre est alimentée en fluide sous pression de commande ;
- Le distributeur peut être un distributeur monostable à commande électrique à trois orifices et deux positions, sa position de repos mettant en communication fluidique le circuit de vidange et la chambre de l'actionneur, et une position active du distributeur mettant en communication fluidique le circuit de mise en pression et la chambre de l'actionneur ;
- Un gicleur d'alimentation de contre-pression peut mettre en communication fluidique le circuit de mise en pression du fluide d'alimentation de l'actionneur et la chambre de l'actionneur ;
- Un gicleur d'alimentation de contre-pression peut mettre en communication fluidique le circuit de mise en pression du fluide d'alimentation de l'actionneur et le circuit de vidange ;
- Le dispositif peut comporter en outre un gicleur de balayage situé en amont d'une chambre de décompression comportant des disques de freinage ;
- Le distributeur peut être un distributeur monostable à quatre orifices et deux positions :
   ∘ Une première position met en communication fluidique le circuit de mise en pression et la chambre de décompression et met également en communication fluidique le circuit de vidange et la chambre de l'actionneur;
   ∘ Une deuxième position met en communication fluidique le circuit de mise en pression et la chambre de l'actionneur et met également en communication fluidique le circuit de vidange et la chambre de décompression.

Selon un autre aspect, l'invention propose une machine tournante comportant un système de freinage tel que défini précédemment.

Selon un mode de réalisation préféré, la machine hydraulique est une machine à pistons radiaux et came multilobes. La machine pouvant être à arbre tournant et carter fixe ou bien à arbre fixe et carter tournant.

A titre de variante, la machine hydraulique peut être une machine à pistons axiaux, à palettes ou à engrenages.

Selon un autre aspect, l'invention propose un véhicule comportant une telle machine tournante.

### PRÉSENTATION DES FIGURES

D'autres caractéristiques, buts et avantages de l'invention ressortiront encore de la description qui suit, laquelle est purement illustrative et non limitative, et doit être lue en regard des figures annexées sur lesquelles :
- La figure 1 précédemment décrite est un schéma de fonctionnement fluidique représentant une solution de l'art antérieur ;
- La figure 2 est un schéma de fonctionnement fluidique représentant un premier mode de réalisation conforme à la présente invention ;
- La figure 3 est un schéma de fonctionnement fluidique représentant un deuxième mode de réalisation conforme à la présente invention ;
- La figure 4 est un schéma de fonctionnement fluidique d'un troisième mode de réalisation conforme à la présente invention ;
- la figure 5 est une vue agrandie du palier d'un moteur hydraulique utilisé dans le circuit de la figure 4.

### DESCRIPTION D'UN OU PLUSIEURS MODES DE MISE EN ŒUVRE ET DE RÉALISATION

L'invention propose grâce à des moyens de contrôle de la pression dans son circuit de vidange d'offrir différents niveaux de pression dans un actionneur en situation de freinage et donc différents couples de freinage.

Les modes de réalisation décrits ci-après concernent le cas d'un système de freinage 1 comportant un système fluidique alimentant un actionneur 2 configuré pour générer un couple de freinage sur un arbre moteur.

Les modes de réalisation décrits ci-après sont illustratifs d'exemples et non limitatifs, dans la mesure où des types d'actionneurs, d'énergie ou de commande différents pourraient être utilisés.

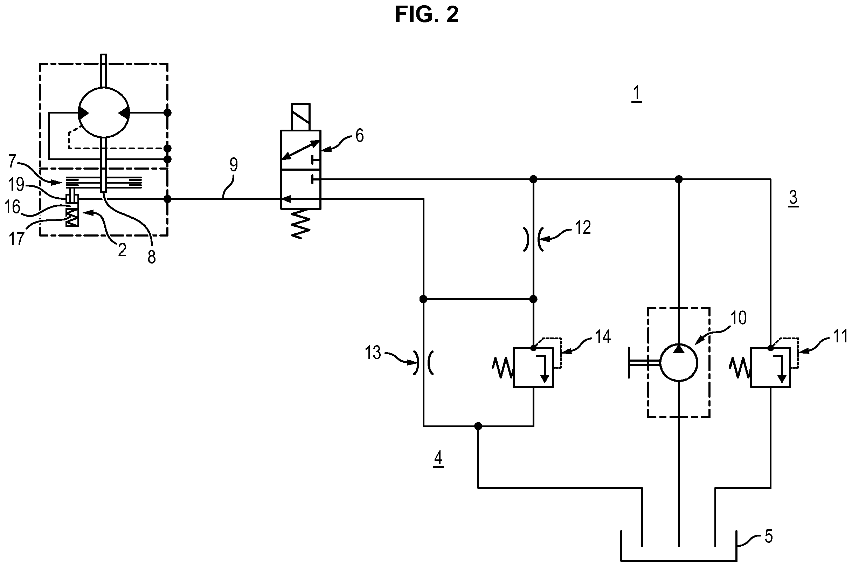

Dans le mode de réalisation représenté sur la figure 2, l'actionneur 2 configuré pour générer un couple de freinage sur un arbre moteur 8 est un vérin à simple effet comportant une chambre 19, un piston 16 et un élément élastique 17 appliquant un effort sur une rangée de disques 7 fixes intercalés de disques 7 mobiles solidaires de l'arbre moteur 8. En d'autres termes, au repos, l'élément élastique 17 sollicite les disques fixes et mobiles 7 en appui réciproque.

De préférence, mais non limitativement la chambre 19 et l'élément élastique 17 sont placés respectivement de part et d'autre du piston 16, l'élément élastique travaillant à la compression.

Ce vérin à simple effet 2 est configuré pour exercer un effort de compression sur les disques 7, grâce à l'élément élastique 17, lorsqu'il n'est pas alimenté en fluide sous pression dans la chambre 19, de sorte que dans une situation de repos où le système n'est pas alimenté en énergie, le système de freinage 1 exerce un couple de freinage.

Le vérin 2 est alimenté en fluide, dans sa chambre 19, par une canalisation 9 reliée à un distributeur 6 à trois orifices et deux positions, faisant le lien entre la canalisation d'alimentation 9 du vérin 2 et des circuits hydrauliques de mise en pression 3 et de vidange 4 du fluide, tous deux reliés à un réservoir 5 commun.

Par convention, dans la suite du texte les notions d'amont et d'aval réfèreront au sens d'écoulement du fluide dans les différents circuits. Dans le circuit de mise en pression 3, le fluide s'écoule du réservoir 5 vers le vérin 2, alors que dans le circuit de vidange 4 il s'écoule du vérin 2 vers le réservoir 5.

Le distributeur 6 étant monostable, une des positions qu'il peut prendre est une première position dite « au repos », c'est-à-dire qu'il occupe lorsqu'il n'est pas alimenté, une deuxième position étant dite « active », cette position active étant consécutive à une commande.

La position au repos correspond à une mise en communication fluidique de la chambre 19 du vérin 2 et du circuit de vidange 4 du fluide, permettant donc à la chambre 19 du vérin 2 de se vider et au vérin 2 d'exercer un effort sur les disques 7 de frein sous l'effet de la sollicitation due à l'élément élastique 17.

La position active, commandée électriquement, correspond à une mise en communication fluidique de la chambre 19 du vérin 2 et du circuit de mise en pression 3 du fluide, ayant pour effet de comprimer l'élément élastique 17, l'empêchant de ce fait d'exercer un effort sur les disques 7 de frein.

Le circuit de mise en pression du fluide 3 comporte une pompe 10 mettant en pression un fluide provenant du réservoir 5, la pompe 10 étant dans ce mode de réalisation entraînée, directement ou indirectement, par le moteur thermique de la machine.

Une soupape 11 située sur une conduite parallèle à celle de la pompe 10 est reliée au réservoir 5, limitant la pression dans le circuit de mise en pression 3.

Afin de générer un effort de freinage intermédiaire pour réaliser la fonction de freinage de secours, selon la présente invention, le circuit de mise en pression 3 du fluide est mis en communication fluidique avec le circuit de vidange 4, le point de jonction étant situé à l'amont du circuit de vidange 4.

En effet, en situation de freinage, le distributeur 6 est sur sa position de repos, mettant en communication fluidique le vérin 2 et le circuit de vidange 4, le moteur thermique étant en marche la pompe 10 continue de tourner.

Le circuit de vidange 4 est donc soumis à une contre-pression de manière à exercer un effort résistant à l'effort de rappel de l'élément élastique 17 générant le couple de freinage, permettant ainsi d'obtenir un couple de freinage intermédiaire.

Le circuit de vidange 4 et le circuit de mise en pression 3 sont donc mis en communication fluidique par l'intermédiaire d'un limiteur de débit 12 ou gicleur d'alimentation de contre-pression.

En aval de ce gicleur d'alimentation de contre-pression 12, le circuit de vidange 4 comporte un limiteur de débit ou gicleur de vidange 13 et une deuxième soupape 14 permettant de dimensionner la valeur de la contre-pression et par conséquent la valeur du couple de freinage de secours.

Le gicleur de vidange 13 et la soupape de réglage de la contre-pression 14 sont montés en parallèle, la conduite située en aval débouchant dans le réservoir 5.

En d'autres termes : le gicleur de vidange 13 est relié à une première entrée du distributeur 6 et ainsi relie la chambre 19 du vérin 2 au réservoir 5, lorsque le distributeur 6 est en position de repos ; la soupape limitatrice de pression 14 est placée en parallèle du gicleur 13 ; le gicleur 12 est placé entre la deuxième entrée du distributeur 6 et le point commun au gicleur 13 et à la soupape 14 ; par ailleurs la pompe 10 et la soupape 11 sont placées en parallèle entre la deuxième entrée du distributeur 6 et le réservoir 5.

Ces dispositions permettent, lorsque le freinage de secours est activé, de vidanger rapidement le frein, plus précisément la chambre 19, grâce à la soupape de réglage de contre-pression 14 pour obtenir le couple de freinage de secours voulu, tout en maintenant cette pression grâce à la communication entre les circuits de mise en pression 3 et de vidange 4 par le gicleur d'alimentation de contre-pression 12.

Lorsque la machine est à l'arrêt, c'est-à-dire pompe 10 arrêtée, le frein vidange petit à petit à travers le gicleur de vidange 13 jusqu'à ce que la pression tombe au niveau de la pression du réservoir 5, soit la pression atmosphérique dans ce mode de réalisation. Ce niveau de pression dans le vérin 2 permet d'obtenir le couple de freinage de stationnement.

En synthèse le premier mode de réalisation illustré sur la figure 2 comprend :
- un actionneur 2 comportant une chambre 19, un piston 16 et un élément élastique 17 configuré pour exercer au repos un effort sur un empilement de disques respectivement fixes et mobiles 7, et exercer ainsi un couple de freinage,
- un distributeur 6 adapté pour relier sélectivement la chambre 19 de l'actionneur à un circuit hydraulique de mise en pression 3 ou à un circuit hydraulique de vidange 4 du fluide,
- le circuit hydraulique de mise en pression 3 étant adapté pour alimenter la chambre 19 et exercer un effort résistant à l'encontre de l'effort de l'élément élastique 17, et comprenant une pompe 10 mettant en pression un fluide provenant d'un réservoir 5,
- le circuit hydraulique de vidange 4 étant adapté au contraire pour vider la chambre 17, et comprenant en parallèle, un limiteur de débit 13, formé par exemple d'un gicleur de vidange, et une soupape 14 permettant de dimensionner la valeur d'une contre-pression et par conséquent la valeur d'un couple de freinage de secours,
- et un limiteur de débit 12, formé par exemple d'un gicleur d'alimentation, qui assure une communication entre le circuit hydraulique de mise en pression 3 et le circuit hydraulique de vidange 4, en reliant la sortie de la pompe 10 et l'entrée du distributeur 6 associée au circuit de vidange 4, de sorte que lorsque la pompe 10 est en service et qu'aucun freinage est requis le circuit hydraulique de mise en pression 3 alimente la chambre 19 pour annuler l'effort de l'élément élastique 17 sur les disques 7, lorsque la pompe 10 est en service et qu'un freinage de secours est activé, le circuit de vidange 4 est soumis à une contre-pression par l'intermédiaire des limiteurs de débit 12 et 13 et de la soupape 14 de manière à exercer un effort résistant à l'effort de rappel de l'élément élastique 17 générant un couple de freinage intermédiaire, tandis que lorsque la pompe 10 est arrêtée la chambre 19 est vidangée par l'intermédiaire du limiteur de débit 13 pour obtenir un couple de freinage de stationnement, correspondant au couple de freinage maximum.

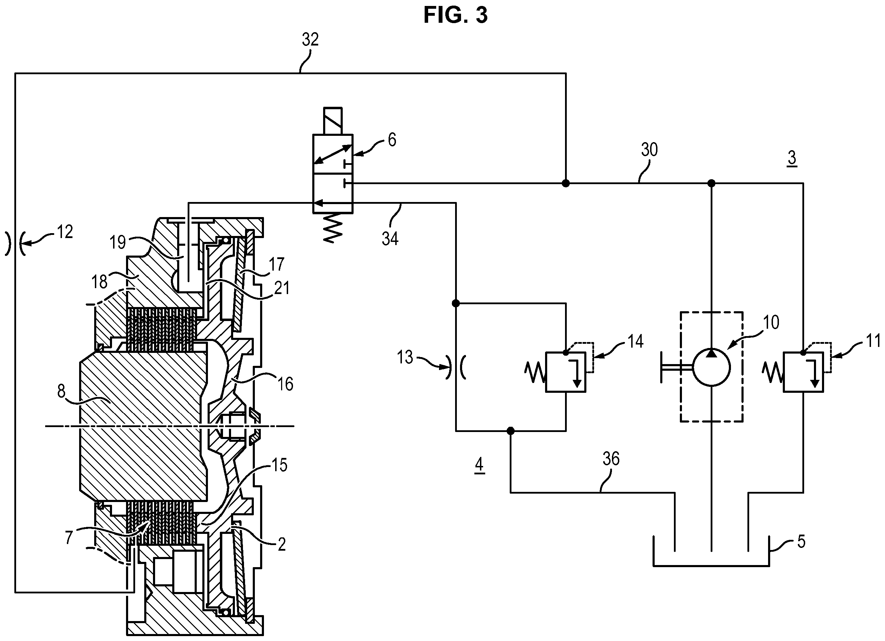

Dans un second mode de réalisation illustré figure 3, l'actionneur 2 comporte un élément élastique 17 ou rondelle élastique conique exerçant un effort de rappel sur une première face d'un piston 16 ou flasque mobile. C'est typiquement le cas d'un frein disposé à l'arrière d'un moteur hydraulique.

L'élément élastique 17 prend appui contre un arrêt axial solidaire du carter 18 de l'actionneur, et effectue son effort de rappel sur une surface annulaire du piston 16.

Cet effort transmis par une excroissance annulaire 15 réalisée sur la deuxième face du piston 16 permet d'engendrer le couple de freinage en comprimant une rangée de disques 7 fixes alternés avec une rangée de disques 7 mobiles solidaires de l'arbre de frein 8 du moteur hydraulique. Dans certains montages, l'arbre de frein et l'arbre moteur ne forment qu'une seule pièce.

Le piston 16 forme une chambre 19 en coopérant de manière étanche avec le carter 18. Cette chambre 19 contient également les disques 7 de frein et est délimitée par la deuxième face du piston 16. La chambre 19 est en communication fluidique avec des circuits de mise en pression 3 et de vidange 4 de fluide.

Le circuit de mise en pression 3 de fluide comprend un réservoir 5, une pompe 10 et un limiteur de pression 11 montés en parallèle en aval de ce réservoir 5 et une première canalisation 30 qui relie une entrée du distributeur 6 au point commun à la pompe 10 et au limiteur 11.

Une seconde canalisation 32 est reliée à la première canalisation 30 en amont du distributeur 6. La seconde canalisation 32 mène à un limiteur de débit ou gicleur d'alimentation de contre pression 12 mettant en communication fluidique le circuit de mise en pression 3 et la chambre 19, le fluide étant injecté au niveau des disques 7 de frein.

Le circuit de vidange 4 de fluide est alimenté par la chambre 19 du frein, au niveau d'une surface annulaire 21 du piston 16, et comprend une troisième canalisation 34 s'étendant entre l'autre entrée du distributeur 6 et un montage en parallèle d'un limiteur de débit ou gicleur de vidange 13 et d'un limiteur de pression ou régulateur de contre-pression 14, ce montage étant mis en communication avec le réservoir 5 par une quatrième canalisation 36.

Le distributeur 6 est un distributeur monostable à trois orifices et deux positions, commandé électriquement. Dans sa position de repos, il met en communication fluidique la chambre 19 et le circuit de vidange 4, permettant de vider progressivement la chambre 19 et donc d'augmenter le couple de freinage, via l'agencement parallèle comprenant le gicleur 13 et le limiteur de pression 14.

Dans sa position active, le distributeur 6 met en communication fluidique le circuit de mise en pression 3 et la chambre 19, déplaçant ainsi le piston 16 en comprimant l'élément élastique 17 sous l'effet de l'augmentation de pression sur la première face du piston 16. Le frein est ainsi desserré.

Ce mode de réalisation permet de ne pas consommer de débit lorsque le frein est relâché, car il n'y a pas de communication fluidique entre le circuit de mise en pression 3 et le circuit de vidange 4 lorsque le distributeur 6 est en position active.

Lorsque le distributeur 6 est désactivé, par exemple dans le cas d'un freinage de secours, il reprend sa position de repos. La chambre 19 est mise en communication fluidique avec le circuit de vidange 4. La pression dans la chambre 19 prend rapidement sa valeur de contre pression grâce au régulateur de contre-pression 14, cette valeur étant maintenue par la communication fluidique entre le circuit de mise en pression 3 du fluide et la chambre 19 au niveau du gicleur d'alimentation de balayage 12.

Le fluide d'alimentation de l'actionneur est donc injecté au niveau des disques 7 de frein, ayant pour effet de balayer les disques 7 dans le cas d'un freinage dynamique, donc d'un mouvement relatif entre les disques 7 fixes et les disques 7 mobiles. Ce balayage améliore le transfert thermique entre les disques 7 et le fluide et augmente donc la capacité énergétique du frein lors du freinage.

Lorsque le moteur est coupé, la pompe 10 du circuit de mise en pression 3 n'est plus entraînée, le fluide de la chambre 19 est évacué à travers le gicleur de vidange 13 jusqu'à l'équilibre des pressions entre le réservoir 5 et la chambre 19. Le couple de freinage de stationnement est alors atteint.

En synthèse le deuxième mode de réalisation illustré sur la figure 3 comprend :
- un actionneur 2 comportant une chambre 19, un piston 16 et un élément élastique 17 configuré pour exercer au repos un effort sur un empilement de disques respectivement fixes et mobiles 7, et exercer ainsi un couple de freinage,
- un distributeur 6 adapté pour relier sélectivement la chambre 19 de l'actionneur à un circuit hydraulique de mise en pression 3 ou à un circuit hydraulique de vidange 4 du fluide,
- le circuit hydraulique de mise en pression 3 étant adapté pour alimenter la chambre 19 et exercer un effort résistant à l'encontre de l'effort de l'élément élastique 17, et comprenant une pompe 10 mettant en pression un fluide provenant d'un réservoir 5,
- le circuit hydraulique de vidange 4 étant adapté au contraire pour vider la chambre 17, et comprenant en parallèle, un limiteur de débit 13, formé par exemple d'un gicleur de vidange, et une soupape 14 permettant de dimensionner la valeur d'une contre-pression et par conséquent la valeur d'un couple de freinage de secours,
- et un limiteur de débit 12, formé par exemple d'un gicleur d'alimentation, qui assure une communication entre le circuit hydraulique de mise en pression 3 et la chambre 19, en reliant par exemple la sortie de la pompe 10 et la chambre qui loge les disques de frein 7,
de sorte que lorsque la pompe 10 est en service et qu'aucun freinage est requis le circuit hydraulique de mise en pression 3 alimente la chambre 19 pour annuler l'effort de l'élément élastique 17 sur les disques 7, lorsque la pompe 10 est en service et qu'un freinage de secours est activé, le circuit de vidange 4 est soumis à une contre-pression par l'intermédiaire du limiteur de débit 13 et de la soupape 14 de manière à exercer un effort résistant à l'effort de rappel de l'élément élastique 17 générant un couple de freinage intermédiaire tout en exerçant un balayage des disques de freins via la seconde canalisation 32, tandis que lorsque la pompe 10 est arrêtée la chambre 19 est vidangée par l'intermédiaire du limiteur de débit 13 pour obtenir un couple de freinage de stationnement, correspondant au couple de freinage maximum.

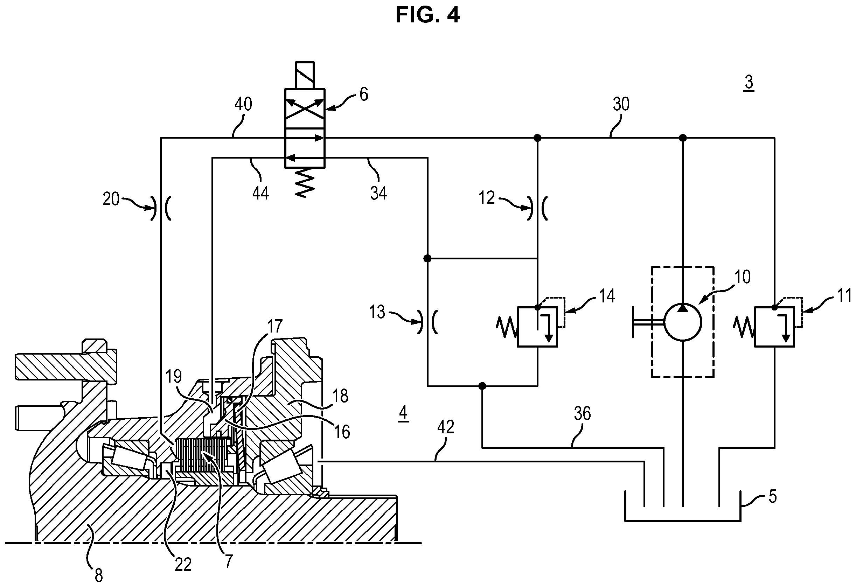

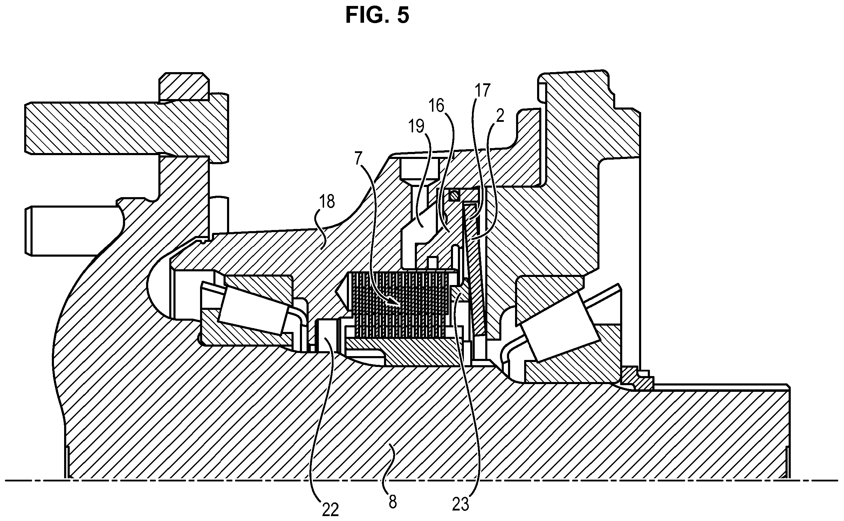

Dans un autre mode de réalisation présenté en figures 4 et 5, le système de freinage comporte une série de disques 7 fixes alternés avec une série de disques 7 mobiles fixés sur l'arbre moteur 8, ces disques 7 étant contenus dans une première chambre de décompression 22, et actionnés par un actionneur 2 comportant un élément élastique 17 ou rondelle conique élastique, exerçant un effort de rappel sur les disques 7 par l'intermédiaire d'une bague annulaire 23. C'est notamment le cas lorsque le système de frein se situe dans le palier d'un moteur thermique.

L'élément élastique 17 s'étend radialement jusqu'à un piston 16 ou piston annulaire concentrique aux disques 7 de frein.

Ce piston 16 est contenu dans une seconde cavité concentrique à la chambre de décompression 22, le piston 16 formant avec un carter 18 une chambre 19 ou chambre de desserrage dans cette cavité.

En référence à la figure 4, la chambre de décompression 22 est mise en communication fluidique avec un distributeur 6 via une canalisation 40 comportant un limiteur de débit ou gicleur de balayage 20. Le fluide peut également transiter à travers la chambre de décompression 22 et un roulement à rouleaux coniques pour être ensuite retourné à un réservoir 5 via une canalisation de vidange 42. La chambre 19 est en communication fluidique avec une canalisation 44 menant au distributeur 6.

Le distributeur 6 est un distributeur monostable à quatre orifices et deux positions, commandé électriquement. En variante le distributeur peut être à commande mécanique, hydraulique ou pneumatique.

Il met en communication fluidique les chambres susnommées 19, 22 et des circuits de mise en pression 3 et de vidange 4 de fluide.

Le circuit de mise en pression 3 comporte une pompe 10 et un limiteur de pression 11 montés en parallèle entre un réservoir 5 en amont et une canalisation aval 30, la canalisation aval 30 étant mise en communication fluidique avec le circuit de vidange 4 au moyen d'un limiteur de débit ou gicleur d'alimentation de contre-pression 12.

Le circuit de vidange 4 comporte une canalisation amont 34 s'étendant entre le distributeur 6 et un montage parallèle d'un limiteur de pression ou régulateur de contre-pression 14 et un limiteur débit ou gicleur de vidange 13.

Une canalisation aval 36 met en relation le réservoir 5 et le montage parallèle comportant le gicleur de vidange 13 et le régulateur de contre-pression 14.

Dans la position de repos du distributeur 6, le circuit de mise en pression 3 du fluide est mis en relation fluidique avec la chambre de décompression 22 via les canalisations 30 et 40, alors que la chambre 19 est mise en communication fluidique avec le circuit de vidange 4 via les canalisations 44 et 34.

Dans la position active du distributeur 6, le circuit de mise en pression 3 est mis en communication fluidique avec la chambre 19 via les canalisations 30 et 44, le piston 16 agissant sur l'élément élastique 17 et relâchant donc les disques 7 de frein.

Dans la position active du distributeur 6, la chambre de décompression 22 est mise en relation fluidique avec le circuit de vidange 4 via les canalisations 40 et 34.

La mise en communication fluidique des circuits de vidange 4 et de mise en pression 3 permet dans la position active du distributeur 6 d'alimenter la chambre de décompression 22 des disques 7 en fluide par l'intermédiaire du gicleur d'alimentation de contre-pression 12 et du gicleur de balayage 20.

Lorsque le distributeur 6 est remis en position de repos, par exemple lors d'un freinage de secours, la pression dans la chambre 19 diminue rapidement par l'action du régulateur de contre-pression 14, permettant de limiter l'effort exercé par l'élément élastique 17 sur les disques 7 de frein et donc de limiter le couple de freinage.

Le niveau de contre-pression est maintenu par la mise en relation fluidique des circuits de mise en pression 3 et de vidange 4 du fluide et le régulateur de contre-pression 14, le fluide du circuit de vidange 4 s'écoulant vers le réservoir 5 en passant par le gicleur de vidange 13.

La chambre de décompression 22 des disques est alors alimentée par le circuit de mise en pression 3 du fluide, le fluide s'écoulant vers le réservoir 5 en traversant la chambre de décompression 22 et le roulement à rouleaux coniques, créant ainsi un balayage des freins.

Le débit de cet écoulement est limité par le gicleur de balayage 20.

Lorsque le moteur est éteint, la pompe 10 n'est plus alimentée et la pression dans la chambre 19 diminue alors que le fluide s'écoule par le gicleur de vidange 13 jusqu'à ce que la pression dans la chambre 19 atteigne la valeur de la pression du réservoir 5, activant ainsi le frein de parking.

En synthèse le troisième mode de réalisation illustré sur les figures 4 et 5 comprend :
- un actionneur 2 comportant une chambre 19, un piston 16 et un élément élastique 17 configuré pour exercer au repos un effort sur un empilement de disques respectivement fixes et mobiles 7, et exercer ainsi un couple de freinage, ainsi qu'une chambre de décompression 22,
- un distributeur 6 adapté pour relier sélectivement la chambre 19 de l'actionneur à un circuit hydraulique de mise en pression 3 ou à un circuit hydraulique de vidange 4 du fluide, et inversement la chambre de décompression 22, par l'intermédiaire d'un limiteur de débit 20, au circuit de vidange 4 ou au circuit de mise en pression,

- le circuit hydraulique de mise en pression 3 étant adapté pour alimenter la chambre 19 et exercer un effort résistant à l'encontre de l'effort de l'élément élastique 17, et comprenant une pompe 10 mettant en pression un fluide provenant d'un réservoir 5,
- le circuit hydraulique de vidange 4 étant adapté au contraire pour vider la chambre 17, et comprenant en parallèle, un limiteur de débit 13, formé par exemple d'un gicleur de vidange, et une soupape 14 permettant de dimensionner la valeur d'une contre-pression et par conséquent la valeur d'un couple de freinage de secours,
- et un limiteur de débit 12, formé par exemple d'un gicleur d'alimentation, qui assure une communication entre le circuit hydraulique de mise en pression 3 et le circuit hydraulique de vidange 4, en reliant la sortie de la pompe 10 et l'entrée du distributeur 6 associée au circuit de vidange 4, de sorte que lorsque la pompe 10 est en service et qu'aucun freinage est requis le circuit hydraulique de mise en pression 3 alimente la chambre 19 pour annuler l'effort de l'élément élastique 17 sur les disques 7, tandis que la chambre de décompression 22 est reliée au circuit de vidange 4 par l'intermédiaire des limiteurs de débit 20 et 13, lorsque la pompe 10 est en service et qu'un freinage de secours est activé, le circuit de vidange 4 est soumis à une contre-pression par l'intermédiaire des limiteurs de débit 12 et 13 et de la soupape 14 de manière à exercer un effort résistant à l'effort de rappel de l'élément élastique 17 générant un couple de freinage intermédiaire tout en effectuant un balayage des disques de freins via la canalisation 40, tandis que lorsque la pompe 10 est arrêtée la chambre 17 est vidangée par l'intermédiaire du limiteur de débit 13 pour obtenir un couple de freinage de stationnement, correspondant au couple de freinage maximum.

Les modes de réalisation préalablement décrits permettent de réaliser une fonction de freinage de secours à partir du système de freinage de stationnement et d'une commande binaire.

La pression réduite dans le frein, peut être obtenue soit par un tarage fixe, ou par une version ajustable. La valeur de réglage pourra être fixe ou varier selon des paramètres de la machine ou de fonctionnement.

Il est cependant possible de réaliser cette fonction ajoutant une valve commandée par un potentiomètre permettant de réguler la pression de la chambre de l'actionneur de freinage, cette solution représentant cependant un coût supplémentaire et ajoutant une commande en cabine.

A titre d'alternative, un accumulateur de pression hydraulique peut être utiliser en complément ou en remplacement de la pompe 10.

Le montage conforme à la présente invention permet d'utiliser le même système de frein pour le stationnement et le frein de secours, sans blocage de roues, avec des couples de freinages disponibles différents. Si la pompe 10 tourne, le freinage est un freinage de secours (couple de freinage intermédiaire). Si la pompe 10 est arrêtée, le freinage est un freinage de stationnement (couple de freinage maximum).

## Revendications

1. Dispositif de freinage de secours comportant un actionneur (2), un circuit de mise en pression (3) alimentant l'actionneur (2) par une pression de commande et un circuit de vidange (4) comportant des moyens (13, 14) de contrôle de débit du fluide d'alimentation de l'actionneur (2), lors d'une vidange de l'actionneur (2), **caractérisé en ce que** les moyens de contrôle comprennent un limiteur de débit de vidange (13) et un limiteur de pression de contre-pression (14) configurés pour définir une pression intermédiaire entre un niveau bas de pression et la pression de commande de l'actionneur (2).

2. Dispositif de freinage selon la revendication 1, **caractérisé en ce que** le limiteur de débit de vidange (13) et le limiteur de pression de contre-pression (14) sont reliés en parallèle entre un distributeur (6) susceptible d'assurer une connexion vers une chambre (19) de l'actionneur (2), et un réservoir (5).

3. Dispositif de freinage selon l'une des revendications précédentes, **caractérisé en ce que** le circuit de mise en pression (3) du fluide comporte une pompe (10) et un limiteur de pression (11).

4. Dispositif de freinage selon l'une des revendications précédentes, **caractérisé en ce qu'**il comporte un distributeur (6) configuré pour prendre au moins deux positions, une première position configurée pour alimenter l'actionneur (2) en fluide sous pression et une deuxième position configurée pour vidanger l'actionneur (2).

5. Dispositif de freinage selon l'une des revendications précédentes, **caractérisé en ce qu'**il comporte au moins un gicleur d'alimentation de contre-pression (12) configuré pour alimenter la chambre (19) de l'actionneur (2) en fluide.

6. Dispositif de freinage selon la revendication 5, **caractérisé en ce que** le gicleur d'alimentation (12) alimente la chambre (19) de l'actionneur par l'intermédiaire d'une chambre contenant des disques de frein (7).

7. Dispositif de freinage selon la revendication 5, **caractérisé en ce que** le gicleur d'alimentation (12) est relié à un ensemble comprenant un limiteur de débit de vidange (13) et un limiteur de pression de contre-pression (14) placés en parallèle sur un circuit de vidange (4).

8. Dispositif de freinage selon l'une des revendications 1 à 7, **caractérisé en ce que** l'actionneur (2) comprend une chambre (19), un piston (16) et un élément élastique (17) qui sollicite le piston (16) dans une position de repos, le système de freinage comporte en outre des disques (7) de frein, l'élément élastique (17) est configuré pour exercer un effort sur les disques (7), et le piston (16) est configuré pour contrer l'effort exercé par l'élément élastique (17) lorsque la chambre (19) est alimentée en fluide sous pression de commande.

9. Dispositif de freinage selon la revendication 8, **caractérisé en ce qu'**il comporte un distributeur (6) monostable à commande électrique à trois orifices et deux positions, qui en position de repos met en communication fluidique le circuit de vidange (4) et une chambre (19) de l'actionneur (2), et en position active met en communication fluidique le circuit de mise en pression (3) et la chambre (19) de l'actionneur (2).

10. Dispositif de freinage selon la revendication 9, **caractérisé en ce qu'**il comprend un gicleur d'alimentation de contre-pression (12) qui met en communication fluidique le circuit de mise en pression (3) du fluide et la chambre (19) de l'actionneur (2).

11. Dispositif de freinage selon la revendication 9 ou 10, **caractérisé en ce qu'**il comprend un gicleur d'alimentation de contre-pression (12) qui met en communication fluidique le circuit de mise en pression (3) du fluide et le circuit de vidange (4).

12. Dispositif de freinage selon la revendications 6, **caractérisé en ce qu'**il comporte en outre un gicleur de balayage (20) situé en amont d'une chambre de décompression (22) comportant les disques (7).

13. Dispositif de freinage selon la revendication 12, **caractérisé en ce que** le distributeur (6) est un distributeur (6) monostable à quatre orifices et deux positions :
. Une première position qui met en communication fluidique le circuit de mise en pression (3) et la chambre de décompression (22) et met également en communication fluidique le circuit de vidange (4) et la chambre (19) de l'actionneur (2) ;
. Une deuxième position qui met en communication fluidique le circuit de mise en pression (3) et la chambre (19) de l'actionneur (2) et met également en communication fluidique le circuit de vidange (3) et la chambre de décompression (22).

14. Dispositif de freinage selon l'une des revendications 1 à 13, **caractérisé en ce qu'**il comprend un circuit de mise en pression (3) d'une chambre (19) de l'actionneur (2) et un circuit de vidange (4) de la chambre (19) de l'actionneur (2), une première restriction (13) sur le circuit de vidange (4) et une deuxième restriction (12) qui relie le circuit de mise en pression (3) et la chambre (19) de l'actionneur (2) directement ou par l'intermédiaire d'une chambre de disques de frein.

15. Dispositif de freinage selon l'une des revendications 1 à 14, **caractérisé en ce que** l'actionneur (2) est un piston de frein d'une machine hydraulique tournante.

16. Machine tournante comportant un dispositif de freinage selon l'une des revendications précédentes.

17. Véhicule comportant un dispositif de freinage selon l'une quelconque des revendications 1 à 15.

## Patentansprüche

1. Notbremsvorrichtung, umfassend ein Betätigungsgerät (2), eine Druckbeaufschlagungs-Schaltung (3) die das Betätigungsgerät (2) durch einen Steuerdruck versorgt und eine Auslassschaltung (4), umfassend Durchsatzsteuer-Mittel (13, 14) des Versorgungsmediums des Betätigungsgeräts (2) bei einem Auslass des Betätigungsgeräts (2), **dadurch gekennzeichnet, dass** die Steuermittel einen Auslassdurchsatz-Begrenzer (13) und einen Gegendruck-Druckbegrenzer (14) umfassen, die ausgestaltet sind, um einen Zwischendruck zwischen einem niedrigen Druckpegel und dem Steuerdruck des Betätigungsgeräts (2) zu definieren.

2. Bremsvorrichtung gemäß Anspruch 1, **dadurch gekennzeichnet, dass** der Auslassdurchsatz-Begrenzer (13) und der Gegendruck-Druckbegrenzer (14) parallel zwischen einem Verteiler (6), der einen Anschluss zu einer Kammer (19) des Betätigungsgeräts (2) gewährleisten kann, und einem Tank (5) verbunden sind.

3. Bremsvorrichtung gemäß einem der voranstehenden Ansprüche, **dadurch gekennzeichnet, dass** die Druckbeaufschlagungs-Schaltung (3) des Mediums eine Pumpe (10) und einen Druckbegrenzer (11) umfasst.

4. Bremsvorrichtung gemäß einem der voranstehenden Ansprüche, **dadurch gekennzeichnet, dass** ein Verteiler (6), der zum Einnehmen von wenigstens zwei Positionen ausgestaltet ist, eine erste Position, die zum Versorgen des Betätigungsgeräts (2) mit mit Druck beaufschlagtem Medium und eine zweite Position, die zum Auslassen des Betätigungsgeräts (2) ausgestaltet ist, umfasst.

5. Bremsvorrichtung gemäß einem der voranstehenden Ansprüche, **dadurch gekennzeichnet, dass** es wenigstens eine Gegendruck-Versorgungsdüse (12) umfasst, die zur Versorgung der Kammer (19) des Betätigungsgeräts (2) mit Medium ausgestaltet ist.

6. Bremsvorrichtung gemäß Anspruch 5, **dadurch gekennzeichnet, dass** die Versorgungsdüse (12) die Kammer (19) des Betätigungsgeräts über eine Kammer versorgt, die Scheibenbremsen (7) enthält.

7. Bremsvorrichtung gemäß Anspruch 5, **dadurch gekennzeichnet, dass** die Versorgungsdüse (12) mit einer Gruppe verbunden ist, umfassend einen Auslassdurchsatz-Begrenzer (13) und einen Gegendruck-Druckbegrenzer (14), die parallel auf einer Auslassschaltung (4) angeordnet sind.

8. Bremsvorrichtung gemäß einem der Ansprüche 1 bis 7, **dadurch gekennzeichnet, dass** das Betätigungsgerät (2) eine Kammer (19), einen Kolben (16) und ein elastisches Element (17) umfasst, das den Kolben (16) in einer Ruheposition anspricht, wobei das Bremssystem darüber hinaus Bremsscheiben (7) umfasst, das elastische Element (17) zum Ausüben einer Beanspruchung auf den Scheiben (7) ausgestaltet ist und der Kolben (16) zum Entgegenwirken gegen die Beanspruchung ausgestaltet ist, die von dem elastischen Element (17) ausgeübt ist, wenn die Kammer (19) unter Steuerdruck mit Medium versorgt ist.

9. Bremsvorrichtung gemäß Anspruch 8, **dadurch gekennzeichnet, dass** sie einen monostabilen Verteiler (6) mit elektrischer Steuerung mit drei Öffnungen und zwei Positionen umfasst, die in Ruheposition die Auslassschaltung (4) und eine Kammer (19) des Betätigungsgeräts (2) in fluidische Kommunikation bringt und in aktiver Position die mit Druck beaufschlagte (3) Schaltung und die Kammer (19) des Betätigungsgeräts (2) in fluidische Kommunikation bringt.

10. Bremsvorrichtung gemäß Anspruch 9, **dadurch gekennzeichnet, dass** sie eine Gegendruck-Versorgungsdüse (12) umfasst, die die Druckbeaufschlagungs-Schaltung (3) des Mediums und die Kammer (19) des Betätigungsgeräts (2) in fluidische Kommunikation bringt.

11. Bremsvorrichtung gemäß Anspruch 9 oder 10, **dadurch gekennzeichnet, dass** sie eine Gegendruck-Versorgungsdüse (12) umfasst, die die Druckbeaufschlagungs-Schaltung (3) des Mediums und die Auslassschaltung (4) in fluidische Kommunikation bringt.

12. Bremsvorrichtung gemäß Anspruch 6, **dadurch gekennzeichnet, dass** sie darüber hinaus eine Spüldüse (20) umfasst, die einer Dekompressionskammer (22) vorgeschaltet angeordnet ist, die die Scheiben (7) umfasst.

13. Bremsvorrichtung gemäß Anspruch 12, **dadurch gekennzeichnet, dass** der Verteiler (6) ein monostabiler Verteiler (6) mit vier Öffnungen und zwei Positionen ist:
- einer ersten Position, die die Druckbeaufschlagungs-Schaltung (3) und die Dekompressionskammer (22) in fluidische Kommunikation bringt und die Auslassschaltung (4) und die Kammer (19) des Betätigungsgeräts (2) ebenfalls in fluidische Kommunikation bringt;
- einer zweiten Position, die die Druckbeaufschlagungs-Schaltung (3) und die Kammer (19) des Betätigungsgeräts (2) in fluidische Kommunikation bringt und die Auslassschaltung (3) und die Dekompressionskammer (22) ebenfalls in fluidische Kommunikation bringt.

14. Bremsvorrichtung gemäß einem der Ansprüche 1 bis 13, **dadurch gekennzeichnet, dass** sie eine Druckbeaufschlagungs-Schaltung (3) einer Kammer (19) des Betätigungsgeräts (2) und eine Auslassschaltung (4) der Kammer (19) des Betätigungsgeräts (2), eine erste Einschnürung (13) auf der Auslassschaltung (4) und eine zweite Einschnürung (12), die die Druckbeaufschlagungs-Schaltung (3) und die Kammer (19) des Betätigungsgeräts (2) direkt oder über eine Scheibenbremsen-Kammer verbindet, umfasst.

15. Bremsvorrichtung gemäß einem der Ansprüche 1 bis 14, **dadurch gekennzeichnet, dass** das Betätigungsgerät (12) ein Bremskolben einer sich drehenden hydraulischen Maschine ist.

16. Sich drehende Maschine, umfassend eine Bremsvorrichtung gemäß einem der voranstehenden Ansprüche.

17. Fahrzeug, umfassend eine Bremsvorrichtung gemäß irgendeinem der Ansprüche 1 bis 15.

## Claims

1. An emergency braking device including an actuator (2), a pressurising circuit (3) supplying the actuator (2) by a control pressure and a drain circuit (4) including means (13, 14) for controlling the flow rate of the fluid supplying the actuator (2), upon draining the actuator (2), **characterised in that** the control means comprise a drain flow limiter (13) and a counter-pressure pressure limiter (14) configured to define an intermediate pressure between a low pressure level and the control pressure of the actuator (2).

2. The braking device according to claim 1, **characterised in that** the drain flow limiter (13) and the counter-pressure pressure limiter (14) are connected in parallel between a directional valve (6) likely to provide connection to a chamber (19) of the actuator (2), and a tank (5).

3. The braking device according to one of the previous claims, **characterised in that** the fluid pressurising circuit (3) includes a pump (10) and a pressure limiter (11).

4. The braking device according to one of the previous claims, **characterised in that** it includes a directional valve (6) configured to take at least two positions, a first position configured to supply the actuator (2) with pressurised fluid and a second position configured to drain the actuator (2).

5. The braking device according to one of the previous claims, **characterised in that** it includes at least one counter-pressure supply nozzle (12) configured to supply the chamber (19) of the actuator (2) with fluid.

6. The braking device according to claim 5, **characterised in that** the supply nozzle (12) supplies the chamber (19) of the actuator through a chamber containing brake disks (7).

7. The braking device according to claim 5, **characterised in that** the supply nozzle (12) is connected to an assembly comprising a drain flow limiter (13) and a counter-pressure pressure limiter (14) placed in parallel on a drain circuit (4).

8. The braking device according to one of claims 1 to 7, **characterised in that** the actuator (2) comprises a chamber (19), a piston (16) and an elastic element (17) which biases the piston (16) into a rest position, the braking system further includes brake disks (7), the elastic element (17) is configured to exert a load on the disks (7), and the piston (16) is configured to counter the load exerted by the elastic element (17) when the chamber (19) is supplied with control pressurised fluid.

9. The braking device according to claim 8, **characterised in that** it includes a three-port two-position electrically controlled monostable directional valve (6), which in a rest position puts the drain circuit (4) and a chamber (19) of the actuator (2) in fluid communication, and in an active position puts the pressurising circuit (3) and the chamber (19) of the actuator (2) in fluid communication.

10. The braking device according to claim 9, **characterised in that** it comprises a counter-pressure supply nozzle (12) which puts the fluid pressurising circuit (3) and the chamber (19) of the actuator (2) in fluid communication.

11. The braking device according to claim 9 or 10, **characterised in that** it comprises a counter-pressure supply nozzle (12) which puts the fluid pressurising circuit (3) and the drain circuit (4) in fluid communication.

12. The braking device according to claim 6, **characterised in that** it further includes a sweep nozzle (20) located upstream of a decompression chamber (22) including the disks (7).

13. The braking device according to claim 12, **characterised in that** the directional valve (6) is a four-port two-position monostable directional valve (6):
• a first position which puts the pressurising circuit (3) and the decompression chamber (22) in fluid communication and also puts the drain circuit (4) and the chamber (19) of the actuator (2) in fluid communication;
• a second position which puts the pressurising circuit (3) and the chamber (19) of the actuator (2) in fluid communication and also puts the drain circuit (3) and the decompression chamber (22) in fluid communication.

14. The braking device according to one of claims 1 to 13, **characterised in that** it comprises a circuit (3) for pressurising a chamber (19) of the actuator (2) and a circuit (4) for draining the chamber (19) of the actuator (2), a first restriction (13) on the drain circuit (4) and a second restriction (12) which connects the pressurising circuit (3) and the chamber (19) of the actuator (2) directly or through a brake disk chamber.

15. The braking device according to one of claims 1 to 14, **characterised in that** the actuator (2) is a brake piston of a rotating hydraulic machine.

16. A rotating machine including a braking device according to one of the previous claims.

17. A vehicle including a braking device according to any of claims 1 to 15.
